# EUROPEAN PATENT APPLICATION

(11) **EP 4 426 007 A1**
(43) Date of publication of application: **04.09.2024**
(21) Application number: 22885975.7
(22) Date of filing: 25.10.2022
(51) Int. Cl.: H04W 28/20, H04W 28/16, H04W 28/18

(54) **CARRIER CELL ESTABLISHMENT METHOD, ELECTRONIC DEVICE, AND COMPUTER-READABLE STORAGE MEDIUM**

(30) Priority: 28.10.2021 CN 202111280077
(71) Applicant: ZTE Corporation, Shenzhen, Guangdong 518057 (CN)
(72) Inventor: WANG, Xiyu, Shenzhen, Guangdong 518057 (CN); WU, Feng, Shenzhen, Guangdong 518057 (CN); WANG, Lingbin, Shenzhen, Guangdong 518057 (CN)
(74) Representative: Boult Wade Tennant LLP
(86) International application number: PCT/CN2022/127451
(87) International publication number: WO 2023/072098

(57) **Abstract**

Embodiments of the present application relate to the technical field of communications. Disclosed are a carrier cell establishment method, an electronic device, and a computer-readable storage medium. The carrier cell establishment method includes: determining a type of a carrier; when the type of the carrier is an irregular type, fragmenting the carrier to obtain one or more carrier fragments, wherein the irregular type comprises a first type and/or a second type, the bandwidth of the carrier of the first type is continuous and different from a preset standard bandwidth, and the bandwidth of the carrier of the second type is discontinuous; establishing a physical cell according to the one or more carrier fragments; and establishing a carrier cell by configuring a protocol stack corresponding to the physical cell.

## Description

### CROSS REFERENCE TO RELATED APPLICATIONS

The present application claims the priority to Chinese Patent Application No. 202111280077.5 filed on October 28, 2021, the entire content of which is hereby incorporated by reference.

### TECHNICAL FIELD

Embodiments of the present application relate to the technical field of communications, in particular to a carrier cell establishment method, an electronic device, and a computer-readable storage medium.

### BACKGROUND

With regard to an irregular carrier, current carrier cell management typically involves establishing a plurality of carrier cells to adapt to the irregular carrier. However, establishing the plurality of carrier cells corresponding to the irregular carrier requires occupation of multiple hardware processing resources, leading to an increase in resource consumption cost.

### SUMMARY

A main objective of embodiments of the present application is to provide a carrier cell establishment method, an electronic device, and a computer-readable storage medium, so as to reduce a resource consumption cost in an irregular carrier scenario.

To achieve at least the above objective, an embodiment of the present application provides a carrier cell establishment method, including: determining a type of a carrier; fragmenting, when the type of the carrier is an irregular type, the carrier to obtain a carrier fragment, wherein the irregular type includes a first type and/or a second type, a bandwidth of the carrier of the first type is continuous and different from a preset standard bandwidth, and a bandwidth of the carrier of the second type is discontinuous; establishing a physical cell according to the carrier fragment; and establishing a carrier cell by configuring a protocol stack corresponding to the physical cell.

To achieve the above objective, an embodiment of the present application further provides an electronic device, including: at least one processor; and a memory in communication connection with the at least one processor, wherein the memory stores instructions executable by the at least one processor, and the instructions are executed by the at least one processor, so that the at least one processor is able to execute the above carrier cell establishment method.

To achieve at least the above objective, an embodiment of the present application further provides a computer-readable storage medium, having a computer program stored thereon. The computer program, when executed by a processor, implements the above carrier cell establishment method.

### BRIEF DESCRIPTION OF THE DRAWINGS

Fig. 1 is a schematic diagram of a carrier of a first type mentioned in an embodiment of the present application.
Fig. 2 is a schematic diagram of a carrier of a second type mentioned in an embodiment of the present application.
Fig. 3 is a schematic flow diagram of a carrier cell establishment method mentioned in an embodiment of the present application.
Fig. 4 is a schematic flow diagram of determining a type of a carrier mentioned in an embodiment of the present application.
Fig. 5 is a schematic diagram of establishing a physical cell when a type of a carrier is a first type mentioned in an embodiment of the present application.
Fig. 6 is a first schematic diagram of establishing a physical cell when a type of a carrier is a second type mentioned in an embodiment of the present application.
Fig. 7 is a second schematic diagram of establishing a physical cell when a type of a carrier is a second type mentioned in an embodiment of the present application.
Fig. 8 is a schematic layering diagram of a carrier cell mentioned in an embodiment of the present application.
Fig. 9 is a schematic diagram of configuring a management interface mentioned in an embodiment of the present application.
Fig. 10 is a schematic diagram of two solutions in an irregular spectrum scenario mentioned in an embodiment of the present application.
Fig. 11 is a schematic structural diagram of an electronic device mentioned in an embodiment of the present application.

### DETAILED DESCRIPTION

In order to make the objective, technical solutions and advantages of embodiments of the present application clearer, various embodiments of the present application will be described below in detail with reference to accompanying drawings. However, those ordinarily skilled in the art may understand that in various embodiments of the present application, many technical details have been proposed to enable readers to better understand the present application. However, even without these technical details and various changes and modifications based on the following embodiments, the technical solution required for protection in the present application can still be achieved. The division of the following embodiments is for convenience in description and should not constitute any limitations on the specific implementations of the present application. All the embodiments can be combined and referenced with each other without contradiction.

For the convenience of understanding the embodiments of the present application, the related technologies involved in the present application are briefly explained below.
(1) Spectrum: a segment of spectrum, usually described by two factors: a frequency point and a bandwidth, such as China Mobile's D-frequency band 2.6G 160M spectrum. An NR protocol divides the spectrum into FR1 (sub6G - a frequency band below 6G) and FR2 (mmW - millimeter wave frequency band). Taking the FR1 frequency band as an example, the spectrum is divided into four types: frequency division duplexing (FDD), time division duplex (TDD), a supplementary uplink (SDL), each of which is described by frequency points and bandwidths.
(2) Carrier: a segment of bandwidth on the spectrum, called the carrier.
(3) Cell: a logical concept established to manage a fixed-size bandwidth on a certain segment of carrier, called the cell. The cell not only corresponds to a segment of carrier, but also corresponds to a series of hardware resources in product implementation to complete various protocol stack functions, such as an antenna feeder (antenna system), a remote radio unit (RRU), and a building base band unit (BBU), and the BBU is, for example, a control system, a baseband system, etc.

In order to constrain the implementation complexity of software and hardware, a 4/5G protocol imposes constraints on a maximum carrier bandwidth (also known as a maximum bandwidth) of the cell. The maximum carrier bandwidth of a 4G cell is 20 MHz (1024-point fast Fourier transform), and a minimum bandwidth is 1.4 MHz. Although different sub-carrier spaces (SCSs) in 5G correspond to different maximum carrier bandwidths, the maximum number of fast Fourier transform (FFT) points is 4096, which also reduces a hardware cost and constrains behaviors of a base station and a terminal.

The cell manages a segment of fixed-size carrier and implements relevant access network protocol stack functions to cover an area, meanwhile a maximum bandwidth value of the cell is constrained by the protocol.

(4) SSB: the cell needs to configure an SS/PBCH signal, known as SSB; wherein, SS represents synchronization signals, which contain a primary synchronization signal (PSS) and a secondary synchronization signal (SSS); and a physical broadcast channel (PBCH) is the same as a master information block (MIB) signal in 4G and mainly contains basic information about the cell, such as the bandwidth.

UE first detects the SSB signal to acquire the basic information about the cell, and then obtains an access network service for the cell.

A segment of 4G carrier can only have one SSB signal, placed at a center of the carrier bandwidth. A segment of 5G carrier may have a plurality of SSB signals, and the plurality of SSBs on the segment of 5G carrier may be divided into two categories: Cell-Defining-SSB (CD-SSB) and non-CD-SSB; wherein CD-SSB defines one cell, based on which a wireless access service may be obtained.

At present, a carrier of an irregular type mainly includes two types, i.e., a first type and a second type. The first type has a continuous bandwidth which is different from each preset standard bandwidth (referred to as type 1); and the second type has a discontinuous bandwidth (referred to as type 2).

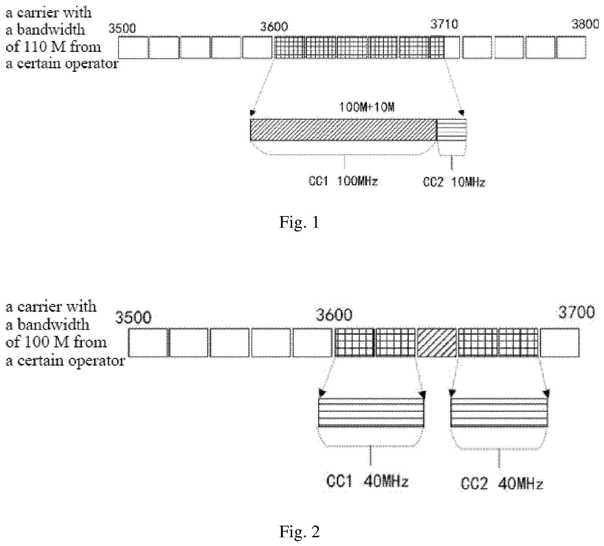

In some embodiments, it is assumed that a certain operator has a segment of spectrum with a bandwidth of 110 MHz, which may also be understood as a segment of carrier with a bandwidth of 110 MHz, this 110 MHz is different from each preset standard bandwidth, that is, the type of the 110 MHz spectrum belongs to the type 1 above. Referring to Fig. 1, the carrier with the bandwidth of 110 MHz is CC1 100 MHz+CC2 10 MHz. A typical cell planning solution at this time is to divide the carrier into two carriers and establish two corresponding carrier cells. The bandwidth of one carrier cell is 100 MHz, and the bandwidth of the other carrier cell is 10 MHz. The reasons for this solution are: firstly, a protocol standard specifies that the maximum bandwidth of the cell is 100 MHz; and secondly, intermediate radio frequency hardware processing (such as FFT) is irregular and exceeds the maximum 4096 points, which will lead to an increase in cost. Problems in this solution include: disadvantage 1, hardware resource waste: there is a significant difference in bandwidth between 100 MHz and 10 MHz, but both require two hardware processing resources (i.e., two sets of intermediate radio frequency hardware lead to the establishment of two cells, which in turn requires two sets of other hardware processing); and disadvantage 2: user equipment (UE) accessing to different cells cannot obtain the same service. A peak of one cell is provided by the bandwidth of 100 MHz, while a peak of the other cell is provided by the bandwidth of 10 MHz, there is a significant difference between the two.

In some embodiments, referring to Fig.2, it is assumed that a certain operator has a carrier of 100 MHz, but 20 MHz in the middle is not available, that is, the type of the carrier of 100 MHz belongs to the type 2 above. A typical cell planning solution at this time is to divide the carrier into two carriers and establish two corresponding carrier cells (40 MHz+40 MHz). The reason for this solution is that the intermediate radio frequency hardware uses a continuous carrier as a processing unit, and two discontinuous carriers require two sets of intermediate radio frequency. Problems in this solution include: disadvantage 1, hardware resource waste: due to the establishment of the two carrier cells, each protocol stack within the two carrier cells needs to consume hardware resources; and compared to just establishing one carrier cell of 100 MHz, hardware resources are wasted nearly twice. Disadvantage 2: lack of flexibility in air interface resource authorization, that is, when certain UE accesses a cell 1 (CC1 in Fig. 2), if resource authorization is required in CC2 (such as CC2 with less frequency selective fading), it needs to be implemented through mobility switching, which takes long time and affects a speed of resource authorization.

It can be seen that the carrier and cell management technology mentioned in the above embodiment at least has the problem of high resource consumption cost when dealing with an irregular carrier scenario.

To at least solve the technical problem of high resource consumption cost mentioned above, an embodiment of the present application provides a carrier cell establishment method, which is applied to an electronic device. The electronic device may be a device with a processing capability, such as a base station, a processor, and a server. The carrier cell establishment method of the embodiment of the present application can reduce the resource consumption cost and enable millisecond-level dynamic implementation of resource authorization under an irregular carrier scenario.

The following is a specific illustration of the implementation details of the carrier cell establishment method in this implementation. The following content is only provided for the convenience of understanding the implementation details and is not necessary for implementing this solution.

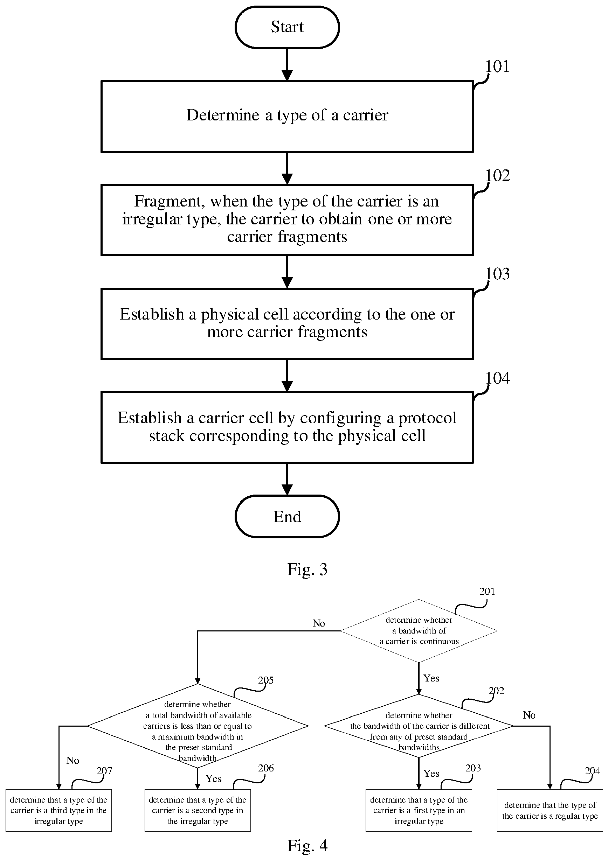

The carrier cell establishment method in this implementation is as illustrated in Fig. 3, and specifically includes the following steps.

Step 101, a type of a carrier is determined.

Step 102, when the type of the carrier is an irregular type, the carrier is fragmented to obtain one or more carrier fragments, wherein the irregular type includes a first type and/or a second type, a bandwidth of the carrier of the first type is continuous and different from a preset standard bandwidth, and a bandwidth of the carrier of the second type is discontinuous.

Step 103, a physical cell is established according to the one or more carrier fragments.

Step 104, a carrier cell is established by configuring a protocol stack corresponding to the physical cell.

In this embodiment, a carrier of an irregular type is fragmented to obtain one or more carrier fragments, a physical cell is established according to the one or more carrier fragments, and then one carrier cell is established by configuring a protocol stack corresponding to the established physical cell. The embodiment of the present application only requires establishing one carrier cell for the carrier of the irregular type, thus avoiding occupation of multiple hardware processing resources due to the need to establish a plurality of carrier cells under a scenario of the carrier of the irregular type, which is beneficial to reducing the resource consumption cost. Furthermore, switching between the plurality of carrier cells is not involved during resource authorization, which is conducive to achieving millisecond-level dynamic implementation of resource authorization.

In step 101, an electronic device may acquire the bandwidth of the carrier and determine the type of the carrier according to the bandwidth of the carrier. The type of the carrier may include a regular type and the irregular type. In a case of a plurality of preset standard bandwidths, the carrier of the regular type may be understood as a carrier with the bandwidth the same as any of the preset standard bandwidths. For example, the preset standard bandwidths may include: 40 MHz, 60 MHz, 80 MHz, 100 MHz, etc. In a specific implementation, the preset standard bandwidth may be understood as a standard cell bandwidth specified by a new radio (NR) standard protocol. The irregular type may include the first type and/or the second type. The bandwidth of the carrier of the first type is continuous and different from the preset standard bandwidth. In the case of a plurality of preset standard bandwidths, the bandwidth of the carrier of the first type is continuous and different from the plurality of preset standard bandwidths. The carrier of the first type may refer to a carrier with a bandwidth of 100 MHz+10 MHz in Fig. 1. The bandwidth of the carrier of the second type is discontinuous, for example, it may be referred to a carrier with a discontinuous bandwidth in Fig. 2.

In one embodiment, the carrier of the second type not only meets a condition of bandwidth discontinuity, but also can meet a condition that a total bandwidth of available carriers is less than or equal to a maximum bandwidth in the preset standard bandwidths. For example, in Fig. 2, a bandwidth of the available carrier is 40 MHz+40 MHz=80 MHz, and 80 MHz is less than the maximum bandwidth of 100 MHz in the preset standard bandwidths.

In one embodiment, a flow diagram for determining the type of the carrier may refer to Fig. 4, including the following steps.

Step 201: whether the bandwidth of the carrier is continuous is determined; if yes, step 202 is performed; if no, step 205 is performed.

Step 202: whether the bandwidth of the carrier is different from any of the preset standard bandwidths is determined; if yes, step 203 is performed; if no, step 204 is performed.

Step 203, it is determined that the type of the carrier is the first type in the irregular type.

Step 204, it is determined that the type of the carrier is the regular type.

Step 205: whether the total bandwidth of the available carriers is less than or equal to the maximum bandwidth in the preset standard bandwidths is determined; if yes, step 206 is performed; if no, step 207 is performed.

Step 206, it is determined that the type of the carrier is the second type in the irregular type.

Step 207, it is determined that the type of the carrier is a third type in the irregular type.

In this embodiment, the case where the irregular type is the first type or the second type is mainly described. When the type of the carrier is the third type or the regular type, the process of the carrier cell establishment method involved in this embodiment may end directly.

In step 102, the electronic device may, when it is determined that the type of the carrier is the irregular type, fragment the carrier to obtain one or more carrier fragments. For example, fragmenting may be performed according to processing capability of an intermediate radio frequency processing unit. It is assumed that the processing capability of the intermediate radio frequency processing unit is to be capable of processing a maximum bandwidth of 100 MHz, then the fragmenting may be performed using 100 MHz as a benchmark for fragmenting and combined with the bandwidth of the carrier. For example, if the bandwidth of the carrier is 110 MHz, it may be divided into two carrier fragments using 100 MHz as the benchmark for fragmenting, namely a carrier fragment of 100 MHz and a carrier fragment of 10 MHz.

In one embodiment, fragmenting, when the type of the carrier is the first type, the carrier to obtain one or more carrier fragments includes: fragmenting the carrier according to a target bandwidth and the bandwidth of the carrier to obtain one or more carrier fragments, wherein the target bandwidth is a maximum bandwidth closest to the bandwidth of the carrier in the standard bandwidths. For example, if the bandwidth of the carrier is 110 MHz and the preset standard bandwidths include 40 MHz, 60 MHz, 80 MHz, and 100 MHz, then the maximum bandwidth closest to the bandwidth 110 MHz of the carrier in the preset standard bandwidths is 100 MHz, that is, the target bandwidth is 100 MHz.

In one embodiment, the electronic device may divide the carrier into M carrier fragments according to the bandwidth of the carrier and the target bandwidth; M is a natural number greater than 1; M-1 carrier fragments among the M carrier fragments have a fragment bandwidth of Max_B, a fragment bandwidth of one carrier fragment is C_b-(M-1)*Max_B, M is a natural number greater than 1, Max_B is the target bandwidth, and C_b is the bandwidth of the carrier. For example, the fragment bandwidth of the first M-1 carrier fragments is Max_B, and a fragment bandwidth of the M-th carrier fragment is C_b-(M-1)*Max_B. Assuming that the bandwidth of the carrier is 110 MHz, according to the bandwidth of the carrier of 110 MHz and the target bandwidth of 100 MHz, the carrier may be divided into two carrier fragments, respectively with bandwidths of 100 MHz and 10 MHz.

In one embodiment, fragmenting, when the type of the carrier is the second type, the carrier to obtain one or more carrier fragments includes: determining the quantity of continuous bandwidths in the carrier and fragmenting the carrier according to the quantity of the continuous bandwidths to obtain one or more carrier fragments, wherein the quantity of the carrier fragments is the same as the quantity of the continuous bandwidths. For example, if the bandwidth of the carrier is 100 MHz and 20 MHz in the middle is not available, the quantity of the continuous bandwidths in the 100 MHz spectrum is two, namely the first 40 MHz (0-40 MHz) and the last 40 MHz (60 MHz-100 MHz) in the 100 MHz. In this case, according to the quantity two) of the continuous bandwidths in the carrier, the carrier may be divided into 2 carrier fragments, respectively with bandwidths of the first 40 MHz and the last 40 MHz in the 100 MHz.

In step 103, the electronic device may establish a physical cell according to the one or more carrier fragments. The quantity of the physical cell established according to actual needs may be one or more. A bandwidth of the physical cell is less than or equal to the maximum bandwidth in the preset standard bandwidths. For example, the bandwidth of the physical cell is less than or equal to a maximum cell bandwidth specified by an NR standard protocol.

In one embodiment, establishing the physical cell according to the one or more carrier fragments when the type of the carrier is the first type includes: determining the quantity M of to-be-established physical cells according to the one or more carrier fragments, wherein the quantity of the to-be-established physical cells is the same as the quantity of the carrier fragments, and M is a natural number greater than 1; and establishing M physical cells based on the carrier, wherein each physical cell corresponds to one carrier fragment, bandwidths of M-1 physical cells among the M physical cells are a target bandwidth, a bandwidth of one physical cell is greater than or equal to a fragment bandwidth of the carrier fragment corresponding to the one physical cell and less than or equal to the target bandwidth, and the target bandwidth is a maximum bandwidth closest to the bandwidth of the carrier in the standard bandwidths. To facilitate understanding, the following is a specific example for illustration.

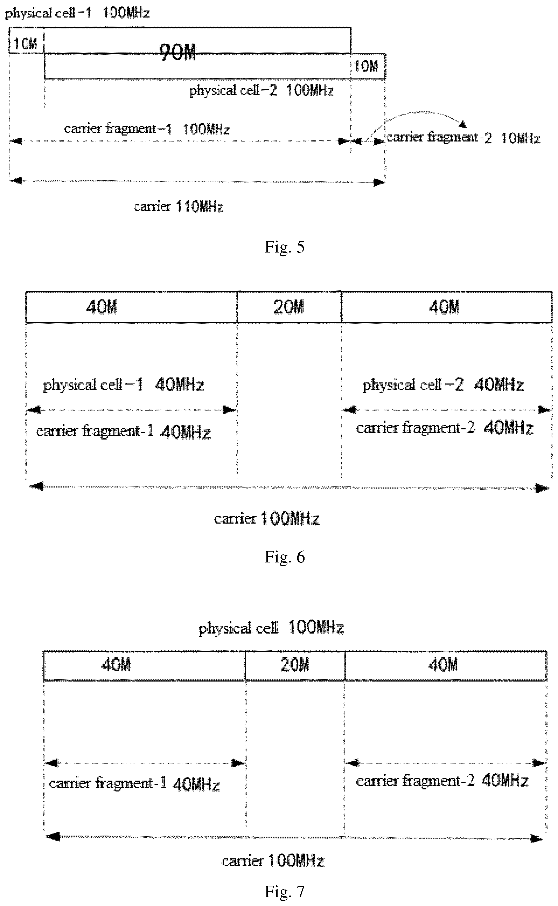

Referring to Fig. 5, the bandwidth of the carrier is 110 MHz, the quantity of the carrier fragments is 2, the quantity of the to-be-established physical cells is also 2, the target bandwidth is 100 MHz, and the fragment bandwidth of the carrier fragment corresponding to the second physical cell is 10 MHz. The bandwidth of the first physical cell established is the target bandwidth of 100 MHz, and the bandwidth of the second physical cell is greater than or equal to 10 MHz and less than or equal to 100 MHz.

In one embodiment, the bandwidths of the M physical cells are all the target bandwidth. The bandwidth of each physical cell is the target bandwidth, ensuring that a bandwidth overlapped area among the M physical cells is maximized, allowing for the most resources that can be shared among the M physical cells, which is conducive to maximizing resource sharing among the M physical cells. For example, referring to Fig. 4, if the bandwidths of the first physical cell (i.e., the physical cell-1 100 MHz in the figure) and the second physical cell (i.e., the physical cell-2 100 MHz in the figure) established are both the target bandwidth of 100 MHz, then the bandwidth overlapped area of the first physical cell and the second physical cell is 90 MHz. At this time, the resources that can be shared between these two physical cells are the most.

It should be noted that the bandwidth of the second physical cell in Fig. 5 only takes 100 MHz as an example. In the specific implementation, a bandwidth range may be taken between 10 MHz and 100 MHz, and for example, may further be set as 90 MHz, 80 MHz, etc. However, this embodiment does not provide specific limitations on this.

In one embodiment, establishing the physical cell according to the one or more carrier fragment when the type of the carrier is the second type includes: determining the quantity M of to-be-established physical cells according to the one or more carrier fragments, wherein the quantity of the to-be-established physical cells is the same as the quantity of the carrier fragments, and M is a natural number greater than 1; and establishing M physical cells based on the carrier, wherein each physical cell corresponds to one carrier fragment, and the bandwidth of each physical cell is the same as the fragment bandwidth of the carrier fragment corresponding to each physical cell. The M physical cells are established, and the M physical cells may be configured with different policy parameters, making it easy to support resource sharing among different operators. To facilitate understanding, the following is a specific example for explanation.

Referring to Fig. 6, the bandwidth of the carrier is 100 MHz, the quantity of the carrier fragments is two, the two carrier fragments are respectively a carrier fragment-1 and a carrier fragment-2 in the figure, and then it is determined that the quantity of the to-be-established physical cells is 2 according to the carrier fragments. Each carrier fragment corresponds to one physical cell, and the bandwidth of each physical cell is the same as the fragment bandwidth of the carrier fragment corresponding to each physical cell. That is, the physical cell-1 corresponds to the carrier fragment-1, and the bandwidth of the physical cell-1 is the same as the bandwidth of the carrier fragment-1, which is 40 MHz; and the physical cell-2 corresponds to the carrier fragment-2, and the bandwidth of the physical cell-2 is the same as the bandwidth of the carrier fragment-2, which is 40 MHz. In Fig. 6, the maximum allocation RB for each UE does not exceed 40 MHz, and the UE is fixed to the 40 MHz for resource allocation. Since two physical cells are established, different policy parameters will be respectively configured based on the two physical cells subsequently, which facilitates supporting different operators for resource sharing.

In one embodiment, establishing the physical cell according to the one or more carrier fragments when the type of the carrier is the second type includes: establishing one physical cell according to the carrier to which the one or more carrier fragments belong, wherein a bandwidth of one physical cell is the same as the bandwidth of the carrier. Establishing one physical cell allows for flexible switching between different carrier fragments within one physical cell, making resource allocation more flexible. To facilitate understanding, the following is a specific example for explanation.

Referring to Fig. 7, the bandwidth of the carrier is 100 MHz, the quantity of the carrier fragments is two, the two carrier fragments are respectively a carrier fragment-1 and a carrier fragment-2 in the figure, then one physical cell is established according to the carrier with the bandwidth of 100 MHz to which the carrier fragment-1 and the carrier fragment-2 belong, and the bandwidth of the one physical cell is the same as that of the carrier, which is specifically 100 MHz. In Fig. 7, the maximum allocation RB for each UE does not exceed 40 MHz, but may be changed at any time between these two 40 MHz, making resource allocation more flexible.

That is to say, there are two ways to establish the physical cell when the type of the carrier is the second type. One is to establish one physical cell based on the carrier, such as the way illustrated in Fig. 7, and the other is to establish a plurality of physical cells based on the carrier fragments, such as the way illustrated in Fig. 6.

In the specific implementation, after establishing the physical cell, a logical cell may further be established based on the physical cell. One or more logical cells may be optionally established under each physical cell according to actual needs.

In step 104, the electronic device obtains a carrier cell by configuring a protocol stack corresponding to the physical cell. For example, the configuration of various parts of an NR communication protocol stack may be completed based on the established physical cell, logical cells, etc., thereby completing the establishment of the carrier cell. The configuration of the protocol stack may include the following configurations: configuration of an intermediate radio frequency processing unit, configuration of a physical layer, configuration of a scheduler, configuration of a media access control (MAC) layer, a radio link control (RLC) protocol layer, and a packet data convergence protocol (PDCP) layer, etc. The configuration mainly refers to configuration of processing rules of various parts in the protocol stack corresponding to the physical cell, such as configuration of a processing rule of the intermediate radio frequency processing unit, a processing rule of the physical layer, a processing rule of the scheduler, processing rules of the MAC layer, the RLC layer, and the PDCP layer, etc.

In one embodiment, when the type of the carrier is the first type, the processing rule of the physical layer and the scheduler in the protocol stack corresponding to the physical cell is configured as: superimposing a resource block corresponding to the target bandwidth with a resource block corresponding to a portion of the carrier that exceeds the target bandwidth, and uniformly performing physical layer processing and resource allocation processing on the superimposed resource blocks, wherein the target bandwidth is the maximum bandwidth closest to the bandwidth of the carrier in the standard bandwidths. Referring to Fig. 5, assuming that a resource block corresponding to the target bandwidth of 100 MHz is 273 RB, based on a preset conversion relationship between the bandwidth and the quantity of the resource blocks, a resource block corresponding to the bandwidth of 10 MHz exceeding 100 MHz is obtained, which is 24 RB, and the superimposed resource block is 273 RB+24 RB=297 RB. That is, the physical layer is designed uniformly with 273 RB+24 RB=297 RB, and uniform resource allocation processing (containing power allocation) is performed with 273 RB+24 RB=297 RB, but each UE can only allocate up to 273 RB (100 MHz). In specific implementation, an actual carrier fragment to which each RB in the superimposed 297 RB belongs may be recorded. It should be noted that in this embodiment, the bandwidth of 100 MHz corresponding to 273 RB is only taken as an example, which is not limited in specific implementation.

In one embodiment, when the type of the carrier is the second type, the processing rule of the physical layer and the scheduler in the protocol stack corresponding to the physical cell is configured as: uniformly performing physical layer processing and resource allocation processing on the resource block corresponding to the bandwidth of the carrier, wherein a resource block corresponding to each continuous bandwidth in the carrier is available, while a resource block corresponding to a portion between the adjacent continuous bandwidths is disabled. Referring to Fig. 6 or Fig. 7, the processing rule of the physical layer and the scheduler may be configured as: uniformly performing physical layer processing and resource allocation processing on the resource block 273 RB corresponding to the bandwidth of 100 MHz of the carrier, wherein a resource block corresponding to each continuous bandwidth (the first 40 MHz and the last 40 MHz in Fig. 6 or Fig. 7) in the carrier is available, while a resource block corresponding to a portion between the adjacent continuous bandwidths (the 20 MHz in the middle in Fig. 6 or Fig. 7) is disabled.

In one embodiment, the processing rule of the intermediate radio frequency processing unit in the protocol stack corresponding to the physical cell may be configured as: performing intermediate radio frequency processing in units of carrier fragments. For example, referring to Fig. 5 to Fig. 7, if the quantity of the carrier fragments is two, two intermediate radio frequency processing units may be set, and each intermediate radio frequency processing unit performs intermediate radio frequency processing in units of one carrier fragment.

In one embodiment, the processing rules of the MAC layer, the RLC layer, and the PDCP layer may be configured as: performing data protocol stack packet processing in units of UE and bearer.

In the embodiment of the present application, except for the intermediate radio frequency processing unit, all subsystems of the base station perform processing in units of carriers, which is beneficial for the overall optimization and utilization of hardware resources and air interface resources.

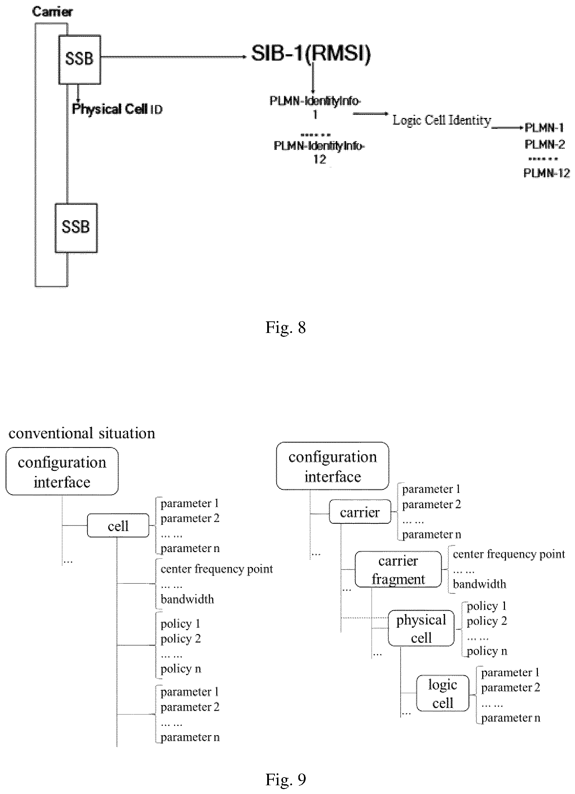

In this embodiment, it is equivalent to redefining the carrier cell, performing layered management on a conventional carrier cell in a communication system, and refining the implementation using a standard protocol principle. The schematic principle diagram of layering is illustrated in Fig. 8, and an original single-layer carrier cell is divided into three layers of structures, i.e., the carrier, the physical cell, and the logical cell. The carrier represents a segment of spectrum, and a CD-SSB configured on the spectrum defines a physical cell ID and blind detection resources for broadcast information. The logical cell ID is defined through remaining minimum system information (RMSI) broadcast information (SIB-1).

In one embodiment, configuration management interface views corresponding to the conventional situation and the embodiment of the present application are illustrated in Fig. 9. In the embodiment of the present application, management is layered, and each layer may independently perform parameter design and parameter management. Compared to a conventional single-layer cell structure, one carrier may be fragmented or may not be fragmented (the carrier of the irregular type is fragmented, while the carrier of the regular type is not fragmented). Parameters configured for the carrier may include the bandwidth of the carrier, a center frequency point, etc. One or more physical cells are configured on the carrier or the carrier fragment (even if there is a carrier fragment, the physical cell may cross the carrier fragment and be mounted on the carrier), and each physical cell may independently set its own channel control policy to ensure a service through these policies, for example, to ensure the real-time and reliability of the service. The logical cell continues to be configured on the physical cell, and each logical cell may independently design its parameters. Taking a discontinuous spectrum (such as 100 M spectrum, with 20 M in the middle not available, and respectively 40 M bandwidths on both ends available) as an example, a configuration mode of the protocol stack corresponding to the physical cell may be as follows that: first, a carrier of 100 M is configured, and then two carrier fragments of 40 M are configured; and each carrier fragment is configured with SSB, a center frequency point, and a carrier bandwidth, and the physical cell is configured based on each carrier fragment. In this embodiment, the cell management may be layered to provide more flexible authorization management for air interface resources.

In one embodiment, referring to Fig. 5, it is assumed that there is a segment of carrier with a continuous bandwidth of 110 MHz in an FR1 frequency band, the NR standard specifies that a maximum cell bandwidth in the FR1 frequency band is 100 MHz, which means that the maximum bandwidth in the preset standard bandwidth is 100 MHz. Because the bandwidth of 110 MHz is continuous and is different from the preset standard bandwidth, it may be determined that the spectrum type of this segment of bandwidth of 110 MHz is the first type in the irregular type. The carrier is divided into two carrier fragments, the bandwidth of the carrier fragment-1 is 100 MHz, and the bandwidth of the carrier fragment-2 is 10 MHz. Then two physical cells are established based on the carrier, and the bandwidths of the two physical cells are both 100 MHz and overlap each other by 90 MHz. Next, one intermediate radio frequency processing unit is configured in units of the carrier fragment-1, and the other intermediate radio frequency processing unit is configured in units of the carrier fragment-2. Then, the physical layer processing is designed uniformly with 273+24=297 RB, and uniform resource allocation processing (containing power allocation) is performed with 273+24=297 RB, but each UE can only be allocated with up to 273 RB (100 M).

In one embodiment, referring to Fig. 6 and Fig. 7, it is assumed that there is a segment of spectrum of the bandwidth of 100 MHz in the FR1 frequency band, with the 20 MHz in the middle not available, it may be determined that the type of the spectrum of the bandwidth of 100 MHz is the second type in the irregular type. The carrier is divided into two carrier fragments, the bandwidth of the carrier fragment-1 is 40 MHz, and the bandwidth of the carrier fragment-2 is 40 MHz. For establishing the physical cell, the following two ways may be selected.

Way 1: Referring to Fig. 7, one physical cell is established based on the carrier, with bandwidth of 100 MHz, and each UE may be allocated with RB maximally not exceeding 40 MHz, but may be changed at any time between two 40 MHz.

Way 2: Referring to Fig. 6, two physical cells are established based on the one or more carrier fragments, and the bandwidth of each physical cell is 40 MHz. Each UE may be allocated with RB maximally not exceeding 40 MHz, but the UE is fixed to one 40 MHz for resource allocation.

After the physical cell is established, one intermediate radio frequency processing unit is configured in units of the carrier fragment-1, and the other intermediate radio frequency processing unit is configured in units of the carrier fragment-2. Then, the physical layer processing is designed uniformly with 273 RB, and uniform resource allocation processing (containing power allocation and the like) is performed with 273 RB, but the RB corresponding to 20 MHz in the middle is disabled, and 106 RB corresponding to 40 MHz at both ends are available.

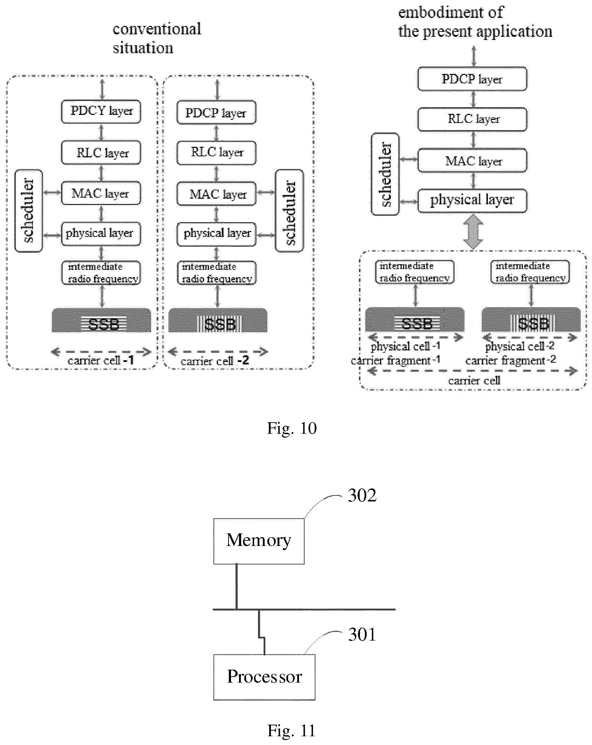

For further convenience in understanding the embodiment of the present application, reference can be made to Fig. 10. A left side of Fig. 10 is a schematic diagram of a solution in a conventional irregular spectrum scenario, and a right side of Fig. 10 is a schematic diagram of a solution in an irregular spectrum scenario provided by the embodiment of the present application. It can be seen from Fig. 10 that under the conventional irregular spectrum scenario, two carrier cells need to be established, and two corresponding protocol stack hardware resources are required. In the embodiment of the present application, only one carrier cell needs to be established, one or more physical cells and logical cells may be established under one carrier cell, and one corresponding protocol stack hardware resource is required. Therefore, in the embodiment of the present application, the air interface protocol stack may be uniformly processed to reduce hardware resource overhead, and air interface resources are shared in real-time, making resource authorization more flexible. Moreover, in the embodiment of the present application, granularity separation is performed for the carrier and the intermediate radio frequency processing unit, and the carrier and the intermediate radio frequency processing capability are decoupled to reduce the resource consumption cost.

It should be noted that the above examples in the embodiments of the present application are illustrated for the convenience of understanding and do not constitute limitations on the technical solution of the present application.

The step division of the above methods is only for the purpose of describing clearly, and can be merged into one step when implemented, or some steps can be split into multiple steps, which are all within the scope of protection of this disclosure as long as the same logical relationship is included. Adding irrelevant modifications or introducing irrelevant designs to the algorithms or the processes, but not changing the core design of the algorithms and processes, is within the scope of protection of this disclosure.

An embodiment of the present application further provides an electronic device, as illustrated in Fig. 11, including: at least one processor 301; and a memory 302 in communication connection with the at least one processor 301, wherein the memory 302 stores instructions executable by the at least one processor 301, and the instructions are executed by the at least one processor 301, so that the at least one processor 301 can execute the carrier cell establishment method of the above embodiments.

The memory 302 and the processor 301 are connected through a bus, the bus may include any number of interconnected buses and bridges, and the bus connects various circuits of one or more processors 301 and the memory 302 together. The bus may further connect various other circuits such as a peripheral device, a voltage stabilizer and a power management circuit together, which are publicly known in the art and therefore are not further described herein. A bus interface provides an interface between the bus and a transceiver. The transceiver may be one or more elements, such as a plurality of receivers and transmitters, providing a unit for communicating with various other apparatuses over a transmission medium. Data processed by the processor 301 is transmitted on a wireless medium through an antenna, and the antenna further receives the data and transfers the data to the processor 301.

The processor 301 is responsible for managing the bus and general processing, and may further provide various functions, including timing, peripheral interfaces, voltage regulation, power management, and other control functions. The memory 302 may be used for storing the data used by the processor 301 during operation performing.

An embodiment of the present application further provides a computer-readable storage medium, storing a computer program. The computer program, when executed by a processor, implements the method embodiments above.

That is, those skilled in the art can understand that all or part of the steps in the above embodiment methods can be implemented by instructing the relevant hardware through a program, the program is stored in a storage medium and includes several instructions to enable a device (such as a single-chip computer, a chip etc.) or a processor to execute all or part of the steps of the methods described in various embodiments of the present application. The aforementioned storage medium includes: a U disk, a mobile hard disk, a read-only memory (ROM), a random access memory (RAM), a magnetic disk or an optical disk and other media that can store program codes.

Those ordinarily skilled in the art can understand that the above implementations are specific embodiments for implementing the present application, and in practical applications, various changes can be made in form and details without deviating from the spirit and scope of the present application.

## Claims

1. A carrier cell establishment method, comprising:
determining a type of a carrier;
fragmenting, when the type of the carrier is an irregular type, the carrier to obtain one or more carrier fragments, wherein the irregular type comprises a first type and/or a second type, a bandwidth of the carrier of the first type is continuous and different from a preset standard bandwidth, and a bandwidth of the carrier of the second type is discontinuous;
establishing a physical cell according to the one or more carrier fragments; and
establishing a carrier cell by configuring a protocol stack corresponding to the physical cell.

2. The carrier cell establishment method of claim 1, wherein fragmenting, when the type of the carrier is the first type, the carrier to obtain one or more carrier fragments comprises:
fragmenting the carrier according to a target bandwidth and the bandwidth of the carrier to obtain one or more carrier fragments, wherein the target bandwidth is a maximum bandwidth closest to the bandwidth of the carrier in the standard bandwidth.

3. The carrier cell establishment method of claim 2, wherein the quantity of the one or more carrier fragments is M, M-1 carrier fragments among the M carrier fragments have a fragment bandwidth of Max_B, a fragment bandwidth of one carrier fragment is C_b-(M-1)*Max_B, M is a natural number greater than 1, Max_B is the target bandwidth, and C_b is the bandwidth of the carrier.

4. The carrier cell establishment method of claim 1, wherein fragmenting, when the type of the carrier is the second type, the carrier to obtain one or more carrier fragments comprises:
determining the quantity of continuous bandwidths in the carrier and fragmenting the carrier according to the quantity of the continuous bandwidths to obtain one or more carrier fragment, wherein the quantity of the one or more carrier fragments is the same as the quantity of the continuous bandwidths.

5. The carrier cell establishment method of claim 1, wherein establishing a physical cell according to the one or more carrier fragments when the type of the carrier is the first type comprises:
determining the quantity M of to-be-established physical cells according to the one or more carrier fragments, wherein the quantity of the to-be-established physical cells is the same as the quantity of the one or more carrier fragments, and M is a natural number greater than 1; and
establishing M physical cells based on the carrier, wherein each physical cell corresponds to one carrier fragment, bandwidths of M-1 physical cells among the M physical cells are a target bandwidth, a bandwidth of one physical cell is greater than or equal to a fragment bandwidth of the carrier fragment corresponding to one physical cell, while less than or equal to the target bandwidth, and the target bandwidth is a maximum bandwidth closest to the bandwidth of the carrier in the standard bandwidth.

6. The carrier cell establishment method of claim 5, wherein the bandwidths of the M physical cells are all the target bandwidth.

7. The carrier cell establishment method of claim 1, wherein establishing a physical cell according to the one or more carrier fragments when the type of the carrier is the second type comprises:
determining the quantity M of to-be-established physical cells according to the one or more carrier fragments, wherein the quantity of the to-be-established physical cells is the same as the quantity of the one or more carrier fragments, and M is a natural number greater than 1; and
establishing M physical cells based on the carrier, wherein each physical cell corresponds to one carrier fragment, and a bandwidth of each physical cell is the same as a fragment bandwidth of the carrier fragment corresponding to each physical cell;
or
establishing one physical cell according to the carrier to which the one or more carrier fragments belong, wherein a bandwidth of one physical cell is the same as the bandwidth of the carrier.

8. The carrier cell establishment method of any of claims 1 to 7, wherein configuring a protocol stack corresponding to the physical cell comprises:
configuring, when the type of the carrier is the first type, a processing rule of a physical layer and a scheduler in the protocol stack corresponding to the physical cell as: superimposing a resource block corresponding to the target bandwidth with a resource block corresponding to a portion of the carrier that exceeds the target bandwidth, and uniformly performing physical layer processing and resource allocation processing on the superimposed resource blocks, wherein the target bandwidth is a maximum bandwidth closest to the bandwidth of the carrier in the standard bandwidth;
configuring, when the type of the carrier is the second type, a processing rule of a physical layer and a scheduler in the protocol stack corresponding to the physical cell as: uniformly performing physical layer processing and resource allocation processing on a resource block corresponding to the bandwidth of the carrier, wherein a resource block corresponding to each continuous bandwidth in the carrier is available, while a resource block corresponding to a portion between the adjacent continuous bandwidths is disabled.

9. An electronic device, comprising:
at least one processor; and
a memory in communication connection with the at least one processor, wherein the memory stores instructions executable by the at least one processor, and the instructions are executed by the at least one processor, so that the at least one processor is able to execute the carrier cell establishment method of any of claims 1 to 8.

10. A computer-readable storage medium, having a computer program stored thereon, wherein the computer program, when executed by a processor, implements the carrier cell establishment method of any of claims 1 to 8.
